# FASCICULE DE BREVET EUROPEEN

(11) **EP 3 717 214 B1**
(45) Date de publication et mention de la délivrance du brevet: **29.12.2021**
(21) Numéro de dépôt: 18825740.6
(22) Date de dépôt: 23.11.2018
(51) Int. Cl.: B29C 70/38, B29C 70/54

(54) **TÊTE D'APPLICATION COMPRENANT UN SYSTÈME DE COUPE A DEUX LAMES MOBILES**
AUFTRAGSKOPF MIT EINEM SCHNEIDSYSTEM MIT ZWEI BEWEGLICHEN KLINGEN
APPLICATION HEAD COMPRISING A CUTTING SYSTEM WITH TWO MOVABLE BLADES

(30) Priorité: 27.11.2017 FR 1701245
(43) Date de publication de la demande: 07.10.2020
(73) Titulaire: Coriolis Group, 56530 Quéven (FR)
(72) Inventeur: GAILLARD, Loïc, 56600 Lanester (FR); COUDURIER, Julien, 56100 Lorient (FR)
(86) Numéro de dépôt international: PCT/FR2018/000254
(87) Numéro de publication internationale: WO 2019/102081

(56) Documents cités:
- EP-A1- 0 846 551
- WO-A1-2017/097818
- DE-A1-102013 111 100

## Description

La présente invention se rapporte à une tête d'application spécialement conçue pour une machine d'application de fibres pour réaliser des pièces en matériaux composites, et plus particulièrement une tête d'application de fibres équipée d'un système de coupe particulier. La présente invention concerne également un procédé de fabrication de pièces en matériaux composites au moyen d'une tête d'application correspondante.

Il est connu des machines d'application de fibre pour l'application au contact sur un outillage de drapage, tel qu'un moule mâle ou femelle, d'une fibre ou d'une bande large formée d'une ou plusieurs fibres plates continues, de type mèches, sèches ou imprégnées de résine thermodurcissable ou thermoplastique, notamment des fibres de carbone, constituées d'une multitude de fils ou filaments de carbone.

Ces machines d'application de fibre, appelées également machines de placement de fibre, comprennent classiquement une tête d'application, un système de déplacement apte à déplacer la tête d'application, des moyens de stockage pour stocker les fibres et des moyens d'acheminement pour acheminer les fibres des moyens de stockage jusqu'à la tête d'application. Cette dernière comprend classiquement un rouleau d'application pour l'application d'une fibre ou d'une bande formée de plusieurs fibres sur une surface d'application d'un outillage de drapage, un système de guidage pour guider une seule fibre ou une bande de plusieurs fibres vers le rouleau d'application, et pour chaque fibre, un système de coupe pour couper une fibre, des moyens de réacheminement pour réacheminer la fibre jusqu'au rouleau d'application après une coupe effectuée par le système de coupe, et un système de blocage pour bloquer la fibre venant d'être coupée.

Chaque système de coupe comprend classiquement une lame apte à être manœuvrée suivant une direction de coupe entre une position inactive et une position active pour couper une fibre.

Dans certains systèmes de coupe proposés, notamment dans le document WO 2008/132301, la lame mobile vient en butée dans la position active, contre un contre-outil, par exemple formé d'une barre en matériau élastomère. Ce type de coupe s'avère satisfaisante, bien que le nombre de coupes puisse s'avérer limité, notamment en raison de l'usure assez rapide du bord de coupe de la lame ou du contre-outil. Par ailleurs, ces systèmes de coupe semblent peu adaptés pour couper des fibres de largeur importante en raison de l'effort de coupe nécessaire pour couper instantanément la fibre sur toute sa largeur.

D'autres systèmes, décrits notamment dans le document WO 2017/072421 et le document US 8 205 532, utilisent une lame fixe ou contre-lame, la fibre étant coupée par cisaillement lors du déplacement de la lame par rapport à la contre-lame. Ces systèmes de coupe permettent un nombre plus important de coupes avant de devoir être remplacés. Par ailleurs, ces systèmes de coupe permettent d'effectuer une coupe de type guillotine, en utilisant des lames avec un bord de coupe incliné pour couper progressivement la fibre et ainsi réduire l'effort de coupe. Toutefois, dans ces deux types de système de coupe, la lame mobile a tendance à déplacer la fibre en direction du contre-outil ou de la contre-lame, pouvant lui imprimer une courbure préjudiciable à son application par le rouleau de la tête d'application. Cela peut également perturber le réacheminement. Par ailleurs, dans le cas d'une fibre pré-imprégnée d'une résine thermodurcissable, la fibre peut rester collée au contre-outil ou à la contre-lame fixe ou au système de guidage après avoir été coupée par la lame mobile.

On a constaté également que dans le cas d'une coupe guillotine, l'extrémité coupée d'une fibre pouvait présenter une inclinaison par rapport à la direction longitudinale de fibre. Cette inclinaison s'explique par le fait que pendant l'intervalle de temps correspondant au déplacement de la lame, de sa position inactive à sa position active, le rouleau d'application continue d'appliquer la fibre en train d'être coupée perpendiculairement à la direction de coupe du porte-lame mobile. L'inclinaison est d'autant plus forte que la fibre est plus large ou que l'intervalle de temps est plus long.

Le document DE102013111100 décrit une tête d'application équipée d'un système de coupe selon le préambule de la revendication 1.

Le but de l'invention est de proposer une solution visant à pallier au moins l'un des inconvénients précités.

A cet effet, l'invention a pour objet une tête d'application spécialement conçue pour réaliser des pièces en matériaux composites, conformément à la revendication 1.

Par cet agencement, on réduit voire élimine le risque de déformer la fibre lors de la coupe. Dans le cas d'une fibre pré-imprégnée, on réduit voire élimine le risque de coller la fibre sur l'une ou l'autre lame mobile. On parvient ainsi à couper une fibre « au milieu », c'est-à-dire sans déviation par rapport au plan de guidage défini par les moyens de guidage. Par cet agencement également, on ralentit l'usure des lames dans le temps, puisque l'effort de coupe est réparti sur les deux lames.

Selon un mode de réalisation, la tête selon l'invention comprend en outre, de préférence pour chaque fibre, des moyens de réacheminement pour réacheminer une fibre jusqu'au rouleau d'application après une coupe effectuée par le système de coupe, ainsi que de préférence un système de blocage pour bloquer une fibre venant être coupée.

Les bords de coupe des deux lames peuvent être rectilignes, curvilignes ou encore présenter une ligne brisée, par exemple en V.

Des bords de coupe rectilignes peuvent s'étendre parallèlement l'un par rapport à l'autre, de la position inactive à la position active des lames suivant la direction de coupe pour couper instantanément la fibre sur toute sa largeur.

De préférence ils forment un angle de coupe constant, non nul, des positions inactives des lames à leurs positions actives, une lame ou les deux lames présentant alors un bord de coupe incliné, le ou les bords de coupe formant un angle différent de 90° avec la direction de coupe, le ou les bords de coupe étant inclinés par rapport à une direction perpendiculaire à la direction de coupe. De préférence encore, la bissectrice de l'angle de coupe est perpendiculaire à la direction de coupe, les deux lames présentant alors un bord de coupe incliné. Par cet agencement, on réduit l'intervalle de temps par rapport à ce qu'il était dans les systèmes de coupe antérieurs. En effet, le point de coupe défini par le sommet de l'angle de coupe se propage plus rapidement à l'intersection des bords de coupe lorsque les lames sont mobiles l'une et l'autre suivant la direction de coupe. Par cet agencement également, on parvient à couper des fibres larges avec un effort de coupe réduit.

Pour couper une fibre « au milieu », c'est-à-dire sans déviation de la fibre par rapport au plan de guidage, on fixera les lames par rapport à des porte-lames de façon telle que la bissectrice de l'angle de coupe soit contenue dans le plan de guidage de la fibre et on déplacera les porte-lames à une même vitesse de translation pour maintenir la bissectrice dans ce plan, des positions inactives aux positions actives des lames.

Suivant un premier mode particulier de réalisation, le système de coupe comprend un premier moyen de commande apte à déplacer les première et deuxième lames en sens opposé suivant la direction de coupe.

De préférence, le premier moyen de commande comprend un vérin actionnant une tige de vérin coopérant avec les première et deuxième lames par l'intermédiaire d'un cône de transmission, ou de préférence d'un premier levier et un deuxième levier reliés respectivement auxdites lames. Le cône de transmission participe à la réduction de l'encombrement du système de coupe, tandis que l'agencement à deux leviers permet en outre au vérin de transmettre un effort de coupe plus important et ainsi de réduire l'angle de coupe des fils tranchants des lames.

Suivant un deuxième mode particulier de réalisation, les première et deuxième lames sont mobiles ensemble, en translation suivant le plan de guidage ou en rotation autour d'une direction parallèle d'un rouleau d'application du système d'application entre une position initiale et une position finale. L'expression « ensemble » signifie que les première et deuxième lames conservent leur alignement suivant la direction de coupe pendant leur déplacement.

Par cet agencement, on permet aux bords de coupe de se déplacer avec la fibre, tout en se déplaçant suivant la direction de translation des lames. Pour annuler l'inclinaison de l'extrémité coupée d'une fibre, on déplacera les lames à la même vitesse que celle du déplacement de la fibre appliquée par le rouleau d'application. La mobilité des deux lames permettant une coupe plus rapide, l'amplitude du déplacement desdites lames avec la fibre sera réduite. Par ailleurs, la différence de vitesse entre les lames et la fibre étant réduite, voire nulle, l'abrasion que subit les lames à cause du frottement de la fibre est réduite, ce qui permet de ralentir l'usure des lames.

Suivant une première variante de réalisation, la tête d'application comprend un deuxième moyen de commande apte à déplacer les première et deuxième lames ensemble, en translation suivant le plan de guidage entre une position initiale et une position finale.

Dans une deuxième variante de réalisation, la tête d'application comprend un moyen de commande intégré apte à déplacer les première et deuxième lames en translation suivant la direction de coupe et à déplacer ensemble lesdites lames en rotation autour d'une direction parallèle à l'axe de rotation du rouleau, ledit moyen de commande intégré étant apte à déplacer lesdites lames entre un premier état dans lequel les lames sont en position inactive et en position initiale et un deuxième état dans lequel les lames sont en position active et en position finale..

Un moyen de commande intégré permet de réduire l'encombrement du système de coupe dans la tête de d'application tout en composant le mouvement en translation des première et deuxième lames suivant la direction de coupe, avec le mouvement en rotation de ladite direction de coupe. On parvient ainsi à réduire voire annuler l'inclinaison de l'extrémité coupée de la fibre en déplaçant par un mouvement en rotation la direction de coupe avec le déplacement de ladite fibre appliquée par le rouleau. Il convient de noter que cette rotation entraîne une légère déviation par rapport à une direction de translation de la fibre. Toutefois, cette déviation est maintenue dans des limites acceptables.

Avantageusement, le moyen de commande intégré comprend un levier de commande mobile autour d'un premier axe de rotation et pourvu d'un premier bras de levier articulé à un premier porte-lame porteur de la première lame et d'un deuxième bras de levier articulé, par l'intermédiaire d'une biellette, à un deuxième porte-lame porteur de la deuxième lame, ledit deuxième bras de levier étant commandé en déplacement par une tige de vérin, ledit premier porte-lame étant articulé, par l'intermédiaire d'une biellette, à un deuxième axe de rotation et lesdits premier et deuxième porte-lames étant reliés entre eux par un moyen de liaison en coulissement suivant la direction de coupe.

Dans cet agencement, le moyen de liaison en coulissement garantit que l'alignement des deux lames mobiles suivant la direction de coupe est conservé pendant leur déplacement d'ensemble en rotation.

Selon l'invention, la deuxième lame est sollicitée élastiquement en appui contre la première lame, directement à plat ou par son bord de coupe. Ce montage élastique des lames, dans les postions actives et les positions inactives des lames, assure une position optimale dans le temps des deux lames l'une par rapport à l'autre, et ainsi une coupe efficace. Une position optimale entre les lames est conservée notamment en cas d'usure des lames. Selon l'invention, la première lame se présente sous la forme d'une plaque plane en forme générale de U, avec le premier bord de coupe formé à la base du U entre les deux branches du U, la deuxième lame, de préférence formée d'une plaque de forme générale rectangulaire, est sollicitée élastiquement en appui contre la première lame, la deuxième lame étant en appui à plat par sa face opposée à son biseau contre la face de la première lame opposée à son biseau, ou par son bord de coupe contre la première lame, plus particulièrement contre la face de la première lame opposée à son biseau, la deuxième lame étant en appui contre les branches du U de la première lame dans les positions inactives des lames dans lesquelles les bords de coupe sont écartés l'un de l'autre. Une lame en U selon l'invention permet la mise en appui élastique de la deuxième lame contre la première lame, notamment dans les positions inactives des lames, tout en étant simple de fabrication, notamment concernant de la réalisation du bord de coupe entre les deux branches. Par ailleurs, les branches du U assurent un guidage de la fibre, en particulier lors de la coupe et évite ainsi tout blocage de la fibre lors de la coupe.

Selon un mode de réalisation particulier non couvert par l'invention, chaque lame comprend deux bords de coupe, tel que décrit dans le document brevet US2017/0197372, avec un premier bord de coupe à une extrémité distale de la lame et un deuxième bord de coupe sur un bord d'une fenêtre de la lame, les lames mobiles étant alors aptes à couper une fibre via les premiers bords de coupe lors du déplacement des lames dans un premier sens dans la direction de coupe, et couper une fibre passant par les deux fenêtres superposées des lames via les deuxièmes bords de coupe par déplacement des lames dans le deuxième sens opposé.

La présente invention a également pour objet un procédé de fabrication d'une pièce en matériau composite comprenant l'application de fibres continues sur une surface d'application, caractérisé en ce que l'application de fibres est réalisée au moyen d'une tête d'application de fibres tel que décrit précédemment, par déplacement relatif de la tête d'application par rapport à la surface de drapage selon des trajectoires de dépose, conformément à la revendication 11.

Les fibres classiquement utilisées sont des fibres plates continues, appelées également mèches, généralement unidirectionnelles, et comprenant une multitude de filaments. Les fibres déposées peuvent être des fibres sèches ou des fibres préimprégnées de résine thermodurcissable ou thermoplastique. Les fibres présentent typiquement des largeurs de 1/8, 1/4 ou 1/2 pouces. 1 pouce est équivalent à 2,54 cm.

- Dans la présente, le terme «fibre » désigne également des fibres de plus grande largeur, supérieure à 1/2 pouce, classiquement appelée bande dans la technologie du placement, par exemple de 1 pouce, 1,5 pouce ou 2 pouces.

D'autres avantages de l'invention apparaîtront à la lumière de la description de modes d'exécution illustrés par les dessins.
La Fig. 1 est une vue schématique du système de coupe selon un premier mode de réalisation, illustrant les lames dans une position initiale suivant un plan de guidage et dans deux positions inactives suivant la direction de coupe.
La Fig. 2 est une vue schématique du système de coupe, illustrant les lames dans une position finale suivant le plan de guidage et dans deux positions actives suivant la direction de coupe.
La Fig. 3 est une vue partielle agrandie du système de coupe de la figure 1.
La Fig. 4 est une vue partielle agrandie du système de coupe de la figure 2.
La Fig. 5 est un agrandissement des lames illustrée par la figure 1, en vue de dessus.
La Fig. 6 est un agrandissement des lames illustrées par la figure 2, en vue de dessus.
La Fig. 7 est une vue schématique d'une tête d'application, illustrant le système de coupe et un système de blocage dans des positions initiales suivant le plan de guidage.
La Fig. 8 est une vue schématique de la tête d'application, dans laquelle les lames du système de coupe se sont déplacées dans une position finale dans le plan de guidage.
La Fig. 9 est une vue schématique de la tête d'application, dans laquelle des outils de blocage du système de bocage se sont déplacés dans une position finale dans le plan de guidage.
La Fig. 10 est une vue schématique de la tête d'application, dans laquelle les lames du système de coupe sont à nouveau dans la position initiale dans le plan de guidage.
Les Fig.11 et Fig.12 sont des vues analogues à celles des figures 3 et 4, illustrant le système de coupe selon l'invention.
Les Fig. 13 et 14 sont respectivement des vues agrandies de dessus des lames illustrées aux figures 11 et 12.

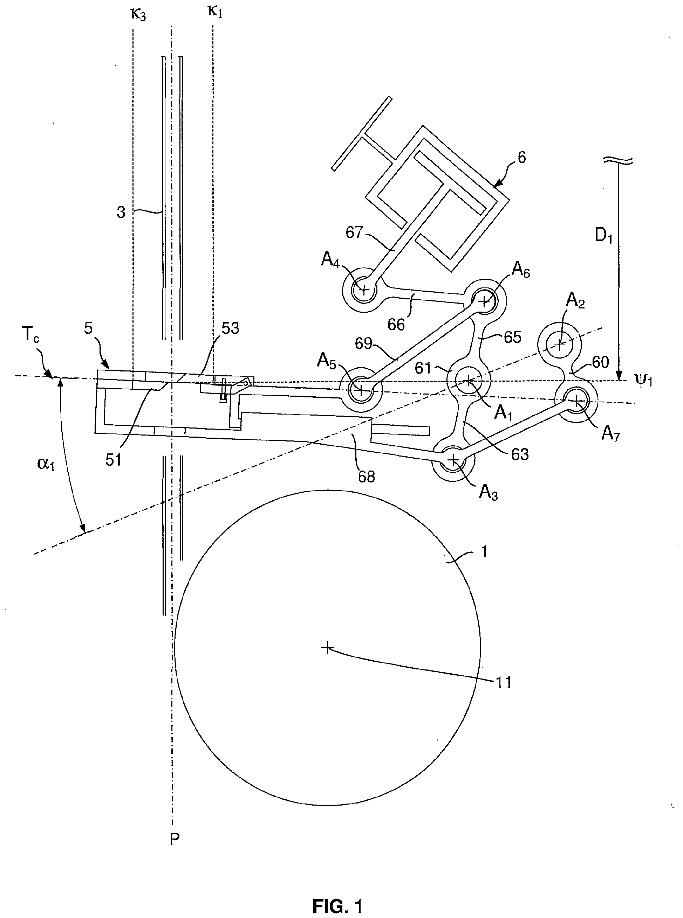

Selon un premier mode d'exécution, illustré par les figures 1 à 6, une tête d'application comprend un rouleau d'application 1, et pour chaque fibre, des moyens de guidage 3 définissant un plan de guidage P pour guider la fibre entrant dans la tête selon un plan de guidage en direction du rouleau, et un système de coupe 5. Les moyens de guidage d'une fibre sont par exemple formés par un canal de guidage formé à l'interface d'assemblage de deux plaques, le plan de guidage correspondant à un plan longitudinal médian du canal. Lorsque la tête est prévue pour l'application d'une bande de plusieurs fibres, la tête comprend un canal de guidage par fibre et un système de coupe par fibre, et peut comprendre un seul rouleau pour appliquer toutes les fibres, ou plusieurs rouleaux, par exemple un rouleau pour chaque fibre. D'autres moyens de guidage peuvent comprendre des tronçons de tube ou une ou plusieurs poulies.

Le système de coupe 5 comprend des première et deuxième lames 51, 53 mobiles en translation suivant une direction de coupe T_{c} entre deux positions inactives κ₁, κ₃ et deux positions actives κ₂, κ₄. Lesdites lames 51, 53 sont mobiles ensemble entre deux positions de coupe initiale ψ₁ et finale ψ₂ représentant une variation de distance suivant le plan de guidage P.

Un moyen de commande intégré 6 est apte à déplacer les première et deuxième lames 51, 53 en translation suivant la direction de coupe T_{c} et à les déplacer ensemble entre les positions de coupe initiale ψ₁ et finale ψ₂, en rotation autour d'une direction parallèle à l'axe 11 de rotation du rouleau d'application 1, ledit moyen de commande intégré étant apte à déplacer les lames entre leurs positions inactives et initiale et leurs positions actives et finale.

Le moyen de commande intégré comprend un levier de commande 61 mobile autour d'un premier axe de rotation A₁ et pourvu d'un premier 63 et d'un deuxième 65, 66 bras de levier. Un premier porte-lame 57 porteur de la première lame 51 est articulé au premier bras de levier 63. Un deuxième porte-lame 59 porteur de la deuxième lame 53 est articulé au deuxième bras de levier 65, 66 par l'intermédiaire d'une biellette 69. Le levier 61 est commandé en déplacement par la tige 67 d'un vérin, articulée au deuxième bras de levier 65, 66. Le premier porte-lame 57 est articulé à un deuxième axe de rotation A₂ par l'intermédiaire d'une biellette 60 et lesdits premier et deuxième porte-lames 57, 59 étant reliés entre eux par un moyen de liaison 68 en coulissement suivant la direction de coupe.

Les axes de rotation A₁ et A₂ sont fixes par rapport à une structure support de la tête d'application, le vérin étant monté fixe par son corps de vérin à ladite structure support. A noter que la liaison entre la tige 67 du vérin et la biellette intermédiaire 66 possède un jeu, par exemple sous la forme d'une lumière oblongue. En variante, le vérin est monté avec un jeu par rapport à la structure support de montage.

Les axes de rotation A₁ et A₂ sont parallèles au plan de guidage P et à l'axe de rotation 11 du rouleau de compactage. Le premier bras de levier 63 est articulé par son extrémité au premier porte-lame 57 autour d'un axe de pivotement A₃, et le deuxième bras de levier est articulé par son extrémité à la tige de vérin autour d'un axe de pivotement A₄, les deux bras de levier forment un angle ente eux, les axes A₁, A₃ et A₄ n'étant pas compris dans un même plan. La biellette 69 est articulée par une première extrémité au deuxième porte-lame 59 autour d'un axe de pivotement A₅ et par sa deuxième extrémité au deuxième bras de levier autour d'un axe de pivotement A₆, cet axe de pivotement A₆ étant disposé entre l'axe A₁ et l'axe A₄, du côté du plan passant par les axes A₁ et l'axe A₄ qui est opposé à l'axe A₅. Dans le présent mode de réalisation illustré sur les figures, les axes A₁, A₃ et A₆ sont alignés, compris dans un même plan, et la distance entre les axes A₁ et A₃ est égale à la distance entre les axes A₁ et A₆. L'axe de rotation A₂ est disposé du côté du plan passant par les axes A₁ et A₃ qui est opposé aux lames et à l'axe A₅, la biellette 60 étant articulée par une extrémité autour de l'axe A₂ fixe, et par l'autre extrémité au premier porte-lame autour d'un axe de pivotement A₇ qui est disposé du même côté du plan passant par les axes A₁ et A₃ que l'axe A₂. Les axes de pivotement A₃-A₇ précités sont parallèles aux axes de rotation A₁ et A₂.

Figure 1, les deux lames 51, 53 sont dans les positions inactive κ₁, κ₃ suivant la direction de coupe T_{c}. Ladite direction T_{c} fait un angle α₁ avec la direction passant par les axes de rotation A₁ et A₂ coupant le plan de guidage P à l'intersection avec ladite direction de coupe T_{c}. Cet angle ainsi que les positions inactives κ₁, κ₃ suivant la direction de coupe T_{c} sont déterminées par l'orientation angulaire du levier de commande 61, elle-même déterminée par la position rentrée de la tige de.vérin 67.

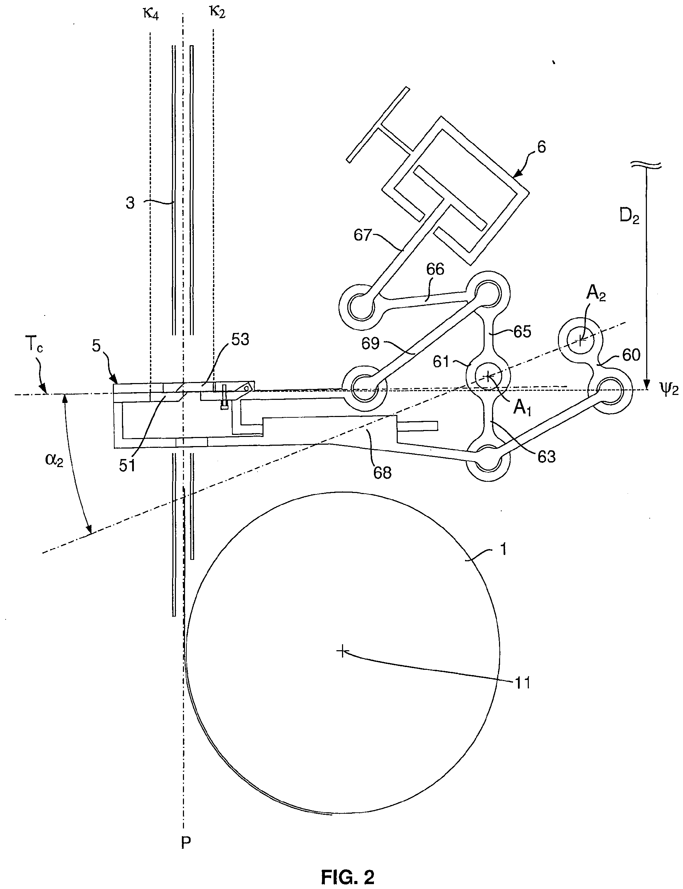

Figure 2, les deux lames 51, 53 se sont déplacées dans les positions actives κ₂, κ₄ suivant la direction de coupe T_{c}. Ladite direction T_{c} fait un angle α₂ avec la direction passant par les axes de rotation A₁ et A₂. Cet angle ainsi que les positions actives κ₂, κ₄ suivant la direction de coupe T_{c} sont déterminées par l'orientation angulaire du levier de commande 61, elle- même déterminée par la position sortie de la tige de vérin 67.

Dans l'un α₁ ou l'autre α₂ des angles pris par la direction de coupe T_{c}, les lames 51, 53 restent alignées suivant ladite direction, ce que le moyen de liaison par coulissement 68 garantit.

La première lame 51 est pourvue d'un biseau 56 définissant un premier bord de coupe 52 et la deuxième lame 53 est pourvue d'un biseau 58 définissant un deuxième bord de coupe 54. Les premier et deuxième bords de coupe 52, 54 forment entre eux un angle de coupe φ et lesdits biseaux 56, 58 sont opposés pour permettre un chevauchement desdits bords de coupe 52, 54 et propager un point de coupe au sommet de l'angle de coupe φ, pendant un intervalle de temps défini par un instant initial et un instant final, correspondant respectivement aux positions inactives κ₁, κ₃ et aux positions actives κ₂, κ₄ des lames 51, 53 suivant la direction de coupe T_{c}.

La première lame 51 est fixée sur un premier porte-lame 57. La deuxième lame 53 est fixée sur un deuxième porte-lame 59 par l'intermédiaire d'une pièce 55 pivotant par rapport audit deuxième porte-lame 59 autour d'un axe 50 et pressée contre le premier porte-lame 57 par un moyen de rappel élastique pour contrôler le jeu nécessaire au chevauchement des bords de coupe 52, 54 des lames 51, 53. Le moyen de rappel élastique est par exemple un ressort monté autour d'une vis 4 traversant la pièce intermédiaire 55 pour se visser dans le deuxième porte-lame 59, le ressort étant disposé entre la tête de vis et la pièce intermédiaire. Selon une variante de réalisation, la deuxième lame est sollicitée élastiquement en appui directement contre la première lame, soit à plat, soit par son bord de coupe, par exemple selon le principe de montage décrit dans la demande WO 2017/072421 précitée.

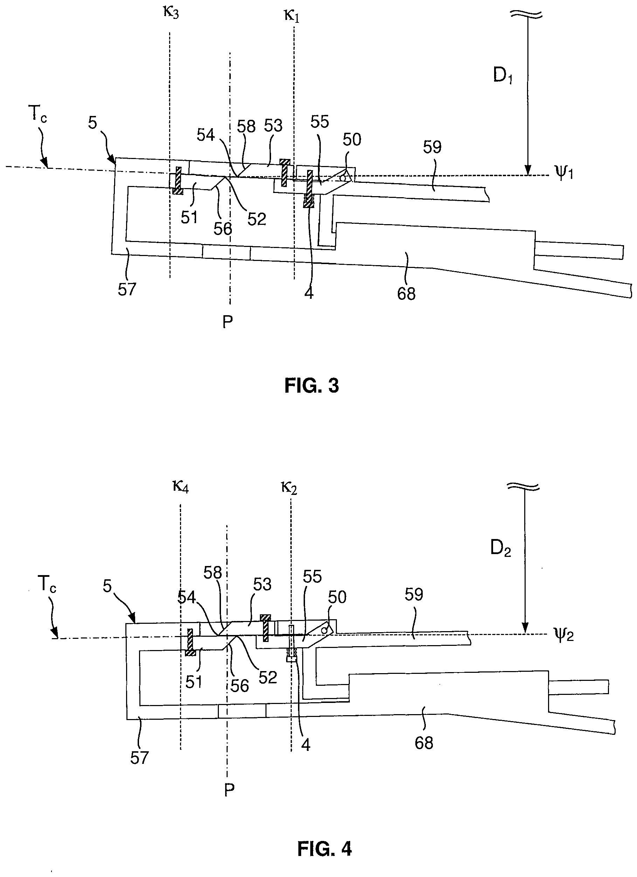

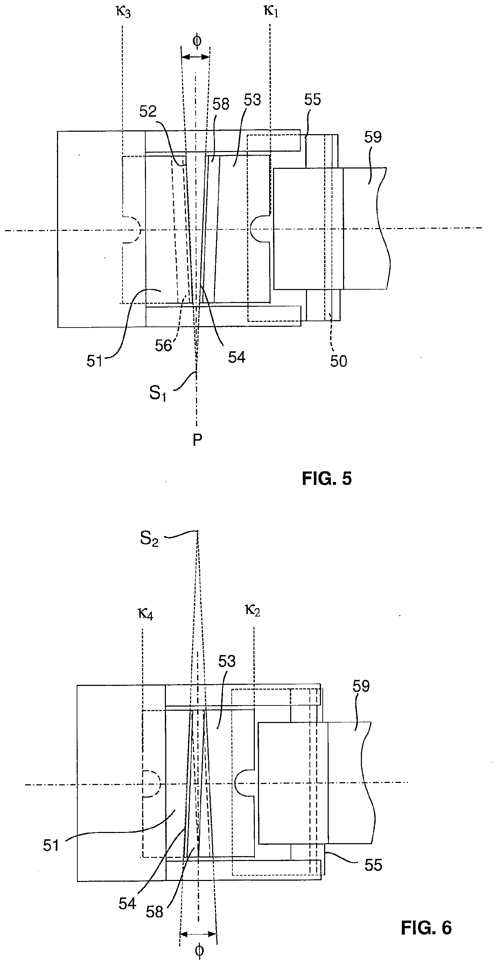

Figures 3 et 5, les première et deuxième lames 51, 53 sont dans leurs positions inactives κ₁, κ₃ suivant la direction de coupe T_{c}. Le sommet de l'angle de coupe φ occupe une position initiale S₁ déterminée par lesdites positions inactives κ₁, κ₃ pour lesquelles les bords de coupe 52, 54 des biseaux 56, 58 ne sont pas chevauchés.

Figures 4 et 6, les première et deuxième lames 51, 53 se sont déplacées dans leurs positions actives κ₂, κ₄ suivant la direction de coupe T_{c}. Le sommet de l'angle de coupe φ occupe une position finale S₂ déterminée par lesdites positions actives κ₂, κ₄ pour lesquelles les bords de coupe 52, 54 des biseaux 56, 58 sont chevauchés.

Entre les positions inactives κ₁, κ₃ et actives κ₂, _{K4}, le sommet S₁, S₂ de l'angle de coupe φ s'est propagé au fur et à mesure que le chevauchement des bords de coupe 52, 54 s'est accentué.

Les bords de coupe 52, 54 sont rectilignes et forment un angle de coupe φ constant, des positions inactives κ₁, κ₃ aux positions actives κ₂. La bissectrice de l'angle de coupe φ est perpendiculaire à la direction de coupe T_{c}. Sur les figures 5 et 6, les positions inactives κ₁, κ₃ et actives κ₂, κ₄ sont avantageusement choisies de façon symétrique par rapport au plan de guidage P pour que la bissectrice de l'angle de coupe φ soit confondue avec la trace dudit plan P.

Un deuxième mode de réalisation se distingue du précédent en ce que la tête d'application comprend un premier moyen de commande apte à déplacer les première et deuxième lames en translation suivant la direction de coupe entre leurs positions inactives et leurs positions actives. La tête d'application comprend un deuxième moyen de commande apte à déplacer ensemble lesdites lames, en translation suivant le plan de guidage entre leur position initiale et leur position finale.

Le premier moyen de commande apte à déplacer les première et deuxième lames en translation suivant la direction de coupe comprend un vérin de type à pinces parallèles, actionnant une tige de vérin coopérant avec chaque pince du vérin par l'intermédiaire d'un cône de transmission ou de premier et deuxième leviers articulés auxdites pinces. A noter que les pinces exercent ici la fonction des porte-lames. Ce type de vérin dans sa version à deux leviers permet avantageusement de démultiplier les efforts de coupe.

Le deuxième moyen de commande apte à déplacer ensemble les première et deuxième lames en translation suivant le plan de guidage comprend, un vérin actionnant une tige de vérin apte à déplacer le vérin du premier moyen de commande.

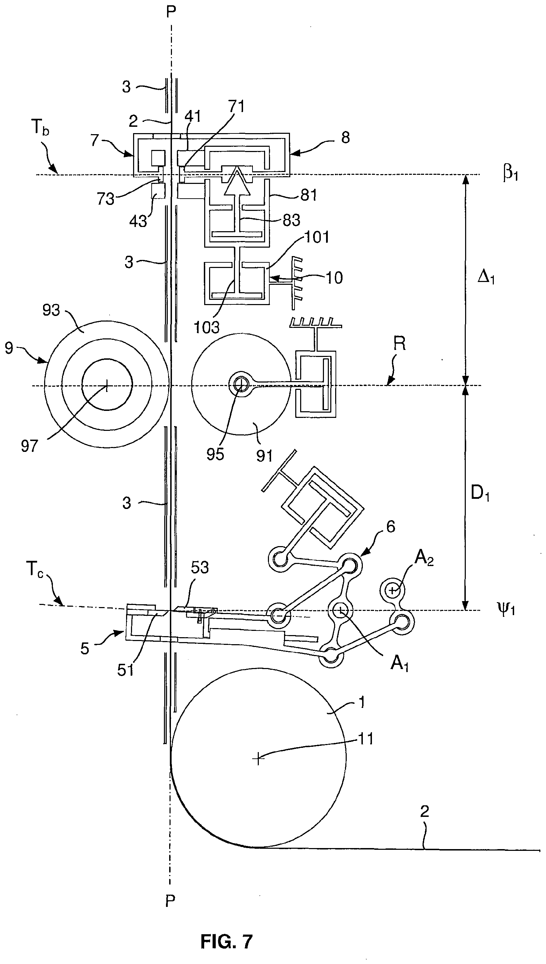

La tête d'application selon l'invention est spécialement conçue pour être installée dans une machine de placement de fibres pour la réalisation de pièces en matériaux composites. Elle est complétée, figures 7 à 10, pour chaque fibre, par un système de blocage 7 et des moyens de réacheminement 9.

Le système de blocage 7 comprend des premier et deuxième outils de blocage 71, 73 mobiles suivant une direction de blocage T_{b} entre deux positions inactives et deux positions actives où ils sont en butée l'un contre l'autre. Un moyen de commande 8 est apte à déplacer lesdits premier et deuxième outils de blocage 71, 73 en translation suivant la direction de blocage T_{b}. Il comprend un vérin 81 actionnant une tige de vérin 83 coopérant avec les premier et deuxième outils de blocage 71, 73 par l'intermédiaire d'un cône de transmission 85.

Lesdits outils de blocage 71, 73 sont mobiles ensemble en translation entre deux positions de blocage initiale β₁ et finale β₂ représentant une variation de distance suivant le plan de guidage P. Ils sont déplacés par un moyen de commande 10 comprenant un vérin 101 actionnant une tige de vérin 103 apte à déplacer le vérin 81 du moyen de commande 8.

Des moyens dévétisseurs 41, 43 sont fixes par rapport à la structure servant de support au montage de la tête d'application. Les positions inactives des premier 71 et deuxième 73 outils de blocage sont en retrait suivant la direction de blocage T_{b} par rapport aux positions fixes des moyens dévétisseurs 41, 43. Les moyens dévétisseurs 41, 43 sont mobiles avec lesdits outils de blocage 71, 73, en translation suivant le plan de guidage et commandés en déplacement par ledit moyen de commande 10.

Les moyens de réacheminement 9 comprennent un premier galet 91 et un deuxième galet 93 dont les axes de rotation 95 et 97 sont alignés suivant une direction R distante de l'axe de rotation 11 du rouleau d'application 1. Lesdits moyens de réacheminement 9 occupent une position fixe par rapport au rouleau d'application 1, entre lesdites lames 51, 53 d'une part et lesdits outils de blocage 71, 73 d'autre part.

Figure 7, les deux lames 51, 53 sont dans leur position initiale ψ₁ pour laquelle la distance suivant le plan de guidage P entre la direction de coupe T_{c} et la position fixe de moyens de réacheminement est égale à D₁. De même, les deux outils de blocage 71, 73 sont dans leur position initiale β₁ pour laquelle la distance suivant le plan de guidage P entre la direction de blocage T_{b} et la position fixe des moyens de réacheminement est égale à Δ₁. Suivant la direction de coupe T_{c}, les lames 51, 53 sont dans leurs positions inactives κ₁, κ₃ (figure 1). Suivant la direction de blocage T_{b}, les outils de blocage 71, 73 sont dans leurs positions inactives.

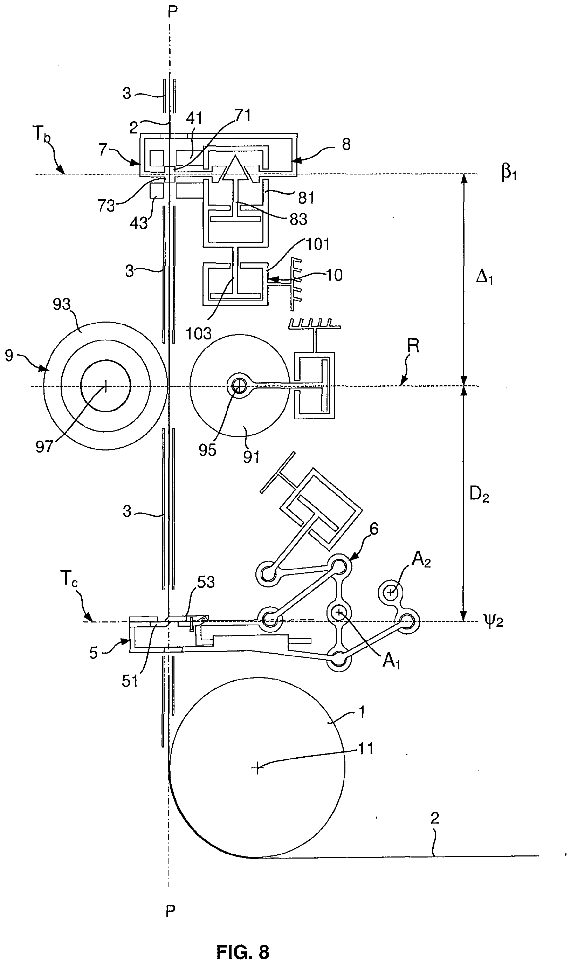

Figure 8, les deux lames 51, 53 se sont déplacées ensemble dans leur position finale ψ₂ pour laquelle la distance suivant le plan de guidage P entre la direction de coupe T_{c} et la position fixe de moyens de réacheminement est égale à D₂. Les deux outils de blocage 71, 73 sont restés dans la position initiale β₁ illustrée par la figure 7. Suivant la direction de coupe T_{c}, les lames 51, 53 se sont déplacées dans leurs positions actives κ₂, κ₄ (figure 2). Suivant la direction de blocage T_{b}, les outils de blocage 71, 73 se sont déplacés dans leurs positions actives.

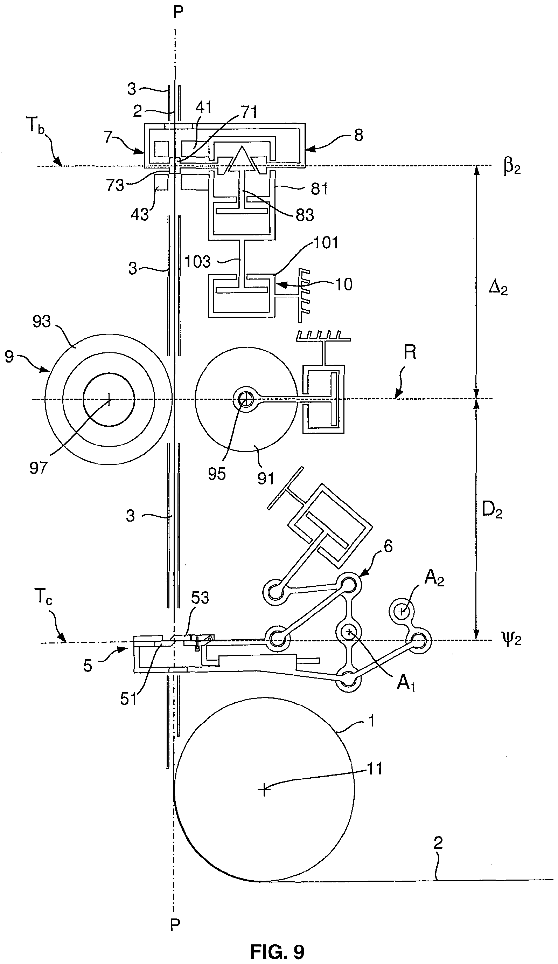

Figure 9, les deux lames 51, 53 sont restées dans leur position finale ψ₂ illustrée par la figure 8. Les deux outils de blocage 71, 73 se sont déplacés ensemble dans leur position finale β₂ pour laquelle la distance suivant le plan de guidage entre la direction de blocage T_{b} et la position fixe des moyens de réacheminement est égale à Δ₂.

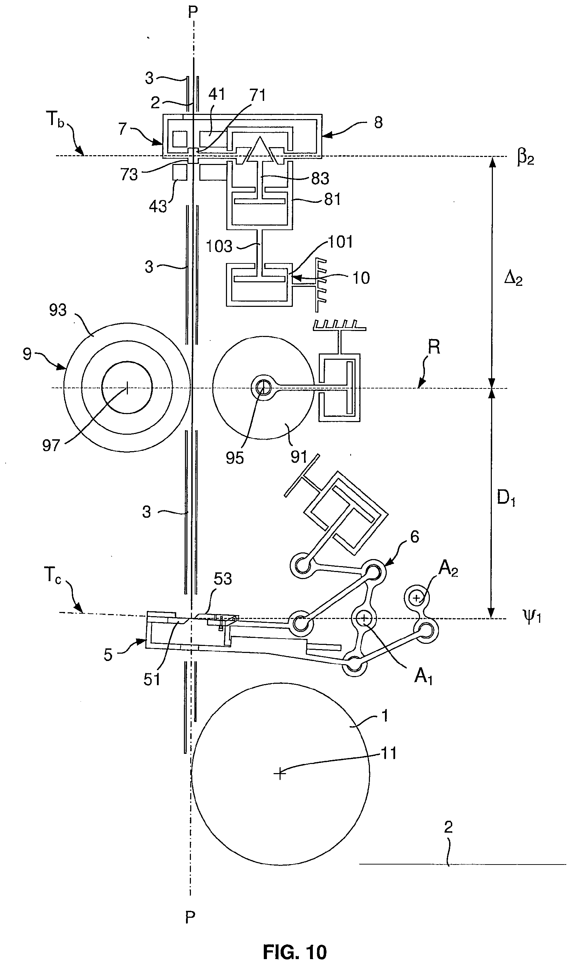

Figure 10, les deux lames 51, 53 se sont déplacées ensemble dans leur position initiale ψ₁ illustrée par la figure 7. Les deux outils de blocage 71, 73 sont restés dans leur position finale β₂ illustrée par la figure 9. Suivant la direction de coupe T_{c}, les lames 51, 53 se sont déplacées dans leurs positions inactives κ₁, κ₃.

Les distances initiales D₁ et Δ₁ sont inférieures aux distances finales D₂ et Δ₂. Ainsi, les positions de coupe initiale ψ₁ et finale ψ₂ représentent une variation positive de distance D₂ - D₁ suivant le plan de guidage P et les positions de blocage initiale β₁ et finale β₂ représentent une variation positive de distance Δ₂ - Δ₁ suivant le plan de guidage.

Il importe de noter que la direction R des moyens de réacheminement est une référence arbitraire pour repérer les distances D₁, Δ₁, D₂ et Δ₂. La direction perpendiculaire au plan de guidage P et passant par l'axe 11 du rouleau d'application 1 est une autre référence arbitraire qui permet de repérer lesdites distances. Il suffit que la direction de référence soit perpendiculaire au plan de guidage et occupe une position fixe dans la tête d'application.

Une fibre 2 est appliquée sur un support (non représenté) par le rouleau d'application 1 au fur et à mesure du déplacement de la tête d'application par rapport audit support. La fibre est guidée par les moyens de guidage dans le plan de guidage P.

Une opération de « coupe à la volée » comprend les étapes suivantes :
- première étape : figure 7, en cours de drapage, la fibre 2 circule librement à travers les outils de coupe formés par les lames 51, 53 et les outils de blocage 71, 73. Les positions inactives κ₁, κ₃ des outils de coupe définissent un état au repos suivant la direction de coupe T_{c}. De même, les positions inactives des outils de blocage définissent un état au repos suivant la direction de blocage T_{b}.
- deuxième étape : figure 8, la fibre 2 est coupée par les lames 51, 53 et bloquée par les outils de blocage 71, 73. Les positions actives κ₂, κ₄ des lames définissent un état actif suivant la direction de coupe T_{c}. De même, les positions actives des outils de blocage définissent un état actif suivant la direction de blocage T_{b}.

Entre les première et deuxième étapes, les lames 51, 53 ont subi, suivant le plan de guidage P, la variation positive de distance D₂ - D₁. Cette variation permet de déplacer la direction de coupe T_{c} en même temps que la fibre 2 et conduit ainsi à annuler l'inclinaison de l'extrémité coupée de ladite fibre.

Les positions inactives κ₁, κ₃ suivant la direction de coupe T_{c} sont symétriques par rapport au plan de guidage P et les lames 51, 53 sont déplacées vers leurs positions actives κ₂, κ₄ à une même vitesse de translation. Ainsi, on parvient à couper la fibre 2 « au milieu », c'est-à-dire sans déviation par rapport au plan de guidage P.
- troisième étape : figure 9, les lames 51, 53 restent dans l'état actif. De même, les outils de blocage 71, 73 restent dans l'état actif.

Entre les deuxième et troisième étapes, les outils de blocage 71, 73 ont subi, suivant le plan de guidage P, la variation positive de distance Δ₂ - Δ₁. Cette variation permet de déplacer la fibre 2 coupée et bloquée, en sens contraire au sens de défilement imposé par le sens de rotation du rouleau d'application 1.
- quatrième étape : figure 10, les lames 51, 53 sont à nouveau dans l'état au repos. Les outils de blocage 71, 73 restent dans l'état actif.

Entre les troisième et quatrième étapes, les lames 51, 53 ont subi, suivant le plan de guidage P, la variation négative de distance D₁ - D₂. La variation de distance Δ₂ - Δ₁ des outils de blocage 71, 73 est choisie supérieure à la variation de distance D₂ - D₁ des outils de coupe pour permettre le retour de ces derniers à la distance D₁ des moyens de réacheminement 9 sans risquer d'entrer en contact avec la fibre 2.
- cinquième étape : les outils de blocage 71, 73 sont à nouveau dans l'état au repos. Les lames 51, 53 restent dans l'état au repos. La fibre 2 circule librement après avoir été réacheminée par les moyens de réacheminement.

Entre la cinquième étape et la première étape de la prochaine coupe « à la volée », les outils de bocage 71, 73 subiront, suivant le plan de guidage P, la variation négative de distance Δ₁ - Δ₂.

L'opération de coupe « à la volée » décrite ci-dessus peut être exécutée avec une tête d'application dans laquelle un seul des deux outils de blocage est mobile en translation suivant la direction de blocage, l'autre outil occupant une position fixe suivant ladite direction. Le document WO 2008/132301 ou le document EP 846551 décrit un mors mobile venant, dans la position active, en butée contre un contre-outil fixe suivant la direction de blocage.

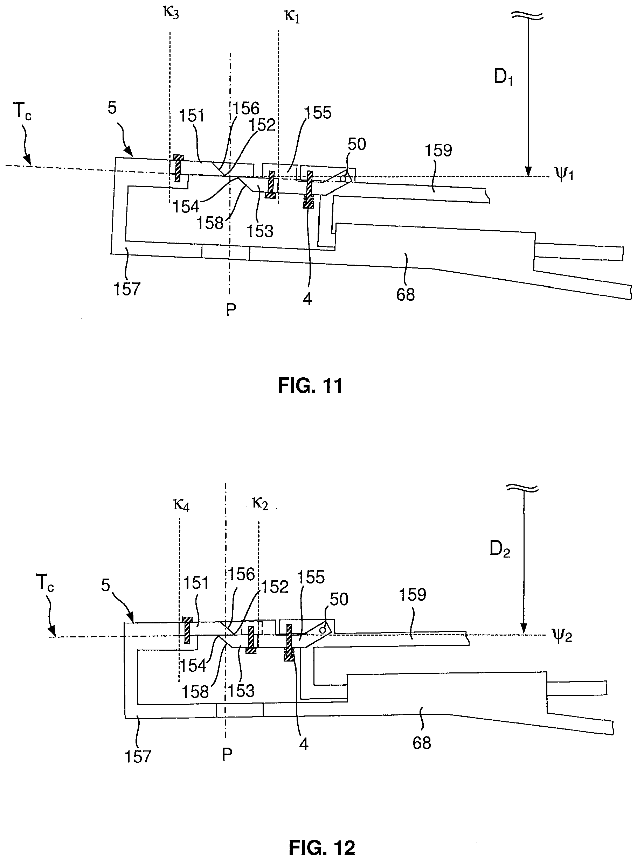

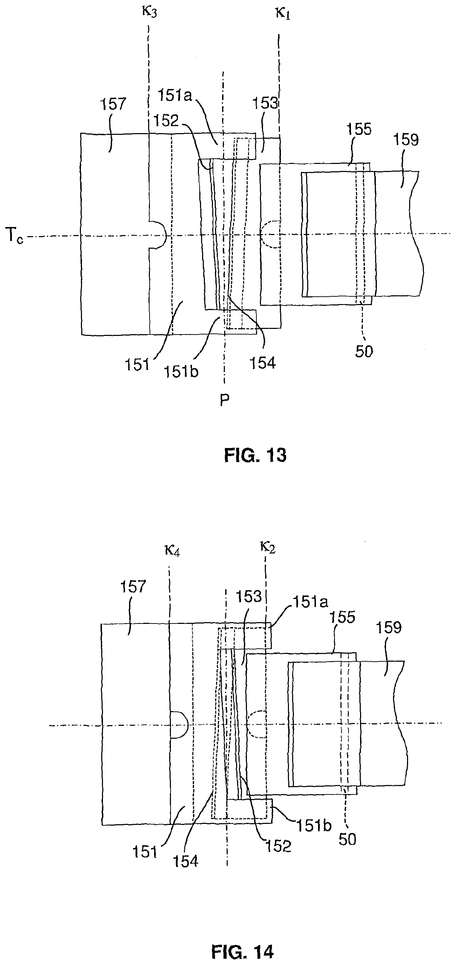

Les figures 11 à 14 illustrent un système de coupe selon l'invention dans lequel une des lames est sollicitée élastiquement en appui directement contre l'autre lame. Comme précédemment, la première lame 151 est pourvue d'un biseau 156 définissant un premier bord de coupe 152, et la deuxième lame 153 est pourvue d'un biseau 158 définissant un deuxième bord de coupe 154. La première lame 151 se présente sous la forme d'une plaque plane en forme de U, le premier bord de coupe 152 étant formé à la base du U, entre les deux branches 151a, 151b du U. La deuxième lame 153 se présente comme précédemment sous la forme d'une plaque plane rectangulaire dont un bord constitue le deuxième bord de coupe 154. La première lame et la deuxième lame sont montées respectivement sur un premier porte-lame 157 et un deuxième porte-lame 159, de sorte que lesdits biseaux 156, 158 soient opposés, orientés vers l'extérieur. Les bords de coupe sont inclinés et forment chacun avec la direction de coupe un angle différent de 90°. A titre d'exemple, le bord incliné d'une lame est incliné d'un angle de 5° par rapport à une direction perpendiculaire à la direction de coupe et parallèle au plan de la lame, l'autre bord de coupe étant incliné de -5° par rapport à ladite direction, l'angle de coupe entre les deux bords de coupe étant alors de 10°. La deuxième lame 153 est fixée sur le deuxième porte-lame 159 par l'intermédiaire d'une pièce 155 montée pivotante sur le deuxième porte-lame 159 autour d'un axe 50, et sollicitée en rotation, dans le sens horaire sur la figure 11, par un moyen de rappel élastique 4, analogue à celui décrit précédemment, de sorte que la deuxième lame soit sollicitée élastiquement en appui directement contre la première lame, soit à plat, les lames étant en appui par leur faces qui sont opposées aux biseaux ou, de préférence, par son bord de coupe 154, ledit bord de coupe étant en appui contre la face de la première lame opposée au biseau 156. Dans leur position inactive, la deuxième lame est en appui contre les branches 151a, 151b de la première lame.

## Revendications

1. Tête d'application spécialement conçue pour réaliser des pièces en matériaux composites, comprenant un système d'application (1), des moyens de guidage (3) définissant un plan de guidage (P), un système de coupe (5) pour couper une fibre (2) guidée par les moyens de guidage et appliquée par le système d'application (1), le système de coupe (5) comprenant une première lame (51, 151) mobile en translation suivant une direction de coupe (T_{c}) entre une position inactive et une position active et pourvue d'un biseau (56, 156) définissant un premier bord de coupe (52, 152), et une deuxième lame (53, 153) mobile en translation suivant la direction de coupe (T_{c}) entre une position inactive et une position active et pourvue d'un biseau (58, 158) définissant un deuxième bord de coupe (54, 154), **caractérisée en ce que** la deuxième lame (153) est sollicitée élastiquement en appui contre la première lame (151), lesdits biseaux (56, 58 ; 156,158) étant opposés pour permettre un chevauchement desdits bords de coupe (52, 54; 152, 154), la première lame (151) se présente sous la forme d'une plaque plane en forme générale de U, avec le premier bord de coupe (152) formé à la base du U, entre les deux branches (151a, 151b) du U, la deuxième lame (153) étant élastiquement en appui contre les branches du U de la première lame dans les positions inactives des lames.

2. Tête d'application selon la revendication 1, **caractérisée en ce que** les premier et deuxième bords de coupe (52, 54; 152, 154) sont rectilignes, et au moins l'un des deux bords de coupe est incliné, de sorte que les deux bords de coupe forment entre eux un angle de coupe (φ).

3. Tête d'application selon la revendication 2, **caractérisée en ce que** le premier bord de coupe (52, 152) et le deuxième bord de coupe (54, 154) sont inclinés, de sorte que la bissectrice de l'angle de coupe (φ) entre le premier bord de coupe et le deuxième bord de coupe est perpendiculaire à la direction de coupe (Tc).

4. Tête d'application selon l'une des revendications 1 à 3, **caractérisée en ce qu'**elle comprend un premier moyen de commande apte à déplacer les première et deuxième lames en sens opposé suivant la direction de coupe (T_{c}).

5. Tête d'application selon la revendication 4, **caractérisée en ce que** le premier moyen de commande comprend un vérin actionnant une tige de vérin coopérant avec les première et deuxième lames par l'intermédiaire d'un cône de transmission ou d'un premier levier et un deuxième levier reliés respectivement auxdites lames.

6. Tête d'application selon l'une des revendications 1 à 3, **caractérisée en ce que** les première (51, 151) et deuxième (53, 153) lames sont mobiles ensemble, en translation suivant le plan de guidage ou en rotation autour d'une direction parallèle à un rouleau d'application.

7. Tête d'application selon la revendication 6, en combinaison avec la revendication 4 ou 5, **caractérisée en ce qu'**elle comprend un deuxième moyen de commande apte à déplacer les première et deuxième lames ensemble, en translation suivant le plan de guidage.

8. Tête d'application selon la revendication 6, **caractérisée en ce qu'**elle comprend un moyen de commande intégré (6) apte à déplacer les première (51, 151) et deuxième (53, 153) lames en translation suivant la direction de coupe (T_{c}) et à déplacer ensemble lesdites lames (51, 53 ; 151, 153) en rotation.

9. Tête d'application selon la revendication 8, **caractérisée en ce que** le moyen de commande intégré (6) comprend un levier de commande (61) mobile autour d'un premier axe de rotation (A1) et pourvu d'un premier bras de levier (63) articulé à un premier porte-lame (57, 157) porteur de la première lame (51, 151) et d'un deuxième bras de levier (65, 66) articulé, par l'intermédiaire d'une biellette (69), à un deuxième porte-lame (59, 159) porteur de la deuxième lame (53, 153), ledit deuxième bras de levier (65 , 66) étant commandé en déplacement par une tige de vérin (67), ledit premier porte-lame (57, 157) étant articulé à un deuxième axe de rotation (A2) par l'intermédiaire d'une biellette (60) et lesdits premier et deuxième porte-lames (57, 59) étant reliés entre eux par un moyen de liaison (68) en coulissement suivant la direction de coupe (T_{c}).

10. Tête d'application selon l'une des revendications 1 à 9, **caractérisée en ce que** la deuxième lame (153) est sollicitée élastiquement en appui par son bord de coupe (154) contre la première lame (151).

11. Procédé de fabrication d'une pièce en matériau composite comprenant l'application de fibres continues sur une surface d'application, **caractérisé en ce que** l'application de fibres est réalisée au moyen d'une tête d'application de fibres selon l'une des revendications 1 à 10, par déplacement relatif de la tête d'application par rapport à la surface de drapage selon des trajectoires de dépose.

## Patentansprüche

1. Auftragskopf, der speziell für die Ausführung von Teilen aus Verbundwerkstoffen ausgestaltet ist, umfassend ein Auftragssystem (1), Führungsmittel (3), die eine Führungsebene (P) definieren, ein Schneidsystem (5) zum Schneiden einer Faser (2), die von den Führungsmitteln geführt und von dem Auftragssystem (1) aufgetragen wird, wobei das Schneidsystem (5) eine erste Klinge (51, 151), die gemäß einer Schneidrichtung (T_{c}) zwischen einer inaktiven Position und einer aktiven Position translationsbeweglich ist und mit einer Abschrägung (56, 156) versehen ist, die eine erste Schneidkante (52, 152) definiert, und eine zweite Klinge (53, 153) umfasst, die gemäß der Schneidrichtung (T_{c}) zwischen einer inaktiven Position und einer aktiven Position translationsbeweglich ist und mit einer Abschrägung (58, 158) versehen ist, die eine zweite Schneidkante (54, 154) definiert, **dadurch gekennzeichnet, dass** die zweite Klinge (153) elastisch gegen die erste Klinge (151) gedrückt wird, wobei die Abschrägungen (56, 58; 156,158) gegenüberliegend sind, um eine Überlappung der Schneidkanten (52, 54; 152, 154) zu ermöglichen, wobei sich die erste Klinge (151) in Form einer ebenen Platte in allgemeiner U-Form darstellt, mit der ersten Schneidkante (152), die an der Basis des U gebildet ist, zwischen den zwei Schenkeln (151a, 151b) des U, wobei die zweite Klinge (153) elastisch gegen die Schenkel des U der ersten Klinge in den inaktiven Positionen der Klingen gedrückt wird.

2. Auftragskopf nach Anspruch 1, **dadurch gekennzeichnet, dass** die erste und zweite Schneidkante (52, 54; 152, 154) geradlinig sind und wenigstens eine der zwei Schneidkanten geneigt ist, sodass die zwei Schneidkanten einen Schneidwinkel (φ) zueinander bilden.

3. Auftragskopf nach Anspruch 2, **dadurch gekennzeichnet, dass** die erste Schneidkante (52, 152) und die zweite Schneidkante (54, 154) geneigt sind, sodass die Winkelhalbierende des Schneidwinkels (φ) zwischen der ersten Schneidkante und der zweiten Schneidkante senkrecht zu der Schneidrichtung (T_{c}) verläuft.

4. Auftragskopf nach einem der Ansprüche 1 bis 3, **dadurch gekennzeichnet, dass** er ein erstes Steuermittel umfasst, das imstande ist, die erste und zweite Klinge in entgegengesetzter Richtung gemäß der Schneidrichtung (T_{c}) zu bewegen.

5. Auftragskopf nach Anspruch 4, **dadurch gekennzeichnet, dass** das erste Steuermittel einen Zylinder umfasst, der eine Zylinderstange betätigt, die mit der ersten und zweiten Klinge mittels eines Übertragungskegels oder eines ersten Hebels und eines zweiten Hebels, die jeweils mit den Klingen verbunden sind, zusammenwirkt.

6. Auftragskopf nach einem der Ansprüche 1 bis 3, **dadurch gekennzeichnet, dass** die erste (51, 151) und zweite (53, 153) Klinge zusammen beweglich sind, in Translation gemäß der Führungsebene oder in Rotation rund um eine Richtung parallel zu einer Auftragswalze.

7. Auftragskopf nach Anspruch 6, in Kombination mit Anspruch 4 oder 5, **dadurch gekennzeichnet, dass** er ein zweites Steuermittel umfasst, das imstande ist, die erste und zweite Klinge zusammen in Translation gemäß der Führungsebene zu bewegen.

8. Auftragskopf nach Anspruch 6, **dadurch gekennzeichnet, dass** er ein integriertes Steuermittel (6) umfasst, das imstande ist, die erste (51, 151) und zweite (53, 153) Klinge in Translation gemäß der Schneidrichtung (T_{c}) zu bewegen und zusammen die Klingen (51, 53; 151, 153) in Rotation zu bewegen.

9. Auftragskopf nach Anspruch 8, **dadurch gekennzeichnet, dass** das integrierte Steuermittel (6) einen Steuerhebel (61) umfasst, der um eine erste Drehachse (A1) beweglich ist und mit einem ersten Hebelarm (63), der an einem ersten Klingenträger (57, 157) angelenkt ist, der die erste Klinge (51, 151) trägt, und einem zweiten Hebelarm (65, 66) versehen ist, der mittels eines Gestänges (69) an einem zweiten Klingenträger (59, 159) angelenkt ist, der die zweite Klinge (53, 153) trägt, wobei die zwei Hebelarme (65, 66) von einer Zylinderstange (67) bewegungsgesteuert werden, wobei der erste Klingenträger (57, 157) an einer zweiten Drehachse (A2) mittels eines Gestänges (60) angelenkt ist und der erste und zweite Klingenträger (57, 59) durch ein Verbindungsmittel (68) gleitend gemäß der Schneidrichtung (T_{c}) miteinander verbunden sind.

10. Auftragskopf nach einem der Ansprüche 1 bis 9, **dadurch gekennzeichnet, dass** die zweite Klinge (153) durch ihre Schneidkante (154) elastisch gegen die erste Klinge (151) gedrückt wird.

11. Verfahren zur Herstellung eines Teils aus Verbundwerkstoff, umfassend die Auftragung von Endlosfasern auf eine Auftragsoberfläche, **dadurch gekennzeichnet, dass** die Auftragung von Fasern mittels eines Auftragskopfs für Fasern nach einem der Ansprüche 1 bis 10 durch relative Bewegung des Auftragskopfs in Bezug auf die Drapieroberfläche gemäß Ablagebahnen ausgeführt wird.

## Claims

1. Application head specially designed for producing composite material parts, comprising an application system (1), guiding means (3) defining a guiding plane (P), a cutting system (5) for cutting a fiber (2) guided by the guiding means and applied by the application system (1), the cutting system (5) comprising a first blade (51, 151) movable in translation along a cutting direction (T_{c}) between an inactive position and an active position and provided with a bevel (56, 156) defining a first cutting edge (52, 152), and a second blade (53, 153) movable in translation along the cutting direction (T_{c}) between an inactive position and an active position and provided with a bevel (58, 158) defining a second cutting edge (54, 154), **characterized in that** the second blade (153) is resiliently biased in abutment against the first blade (151), said bevels (56, 58, 156, 158) being opposed to allow an overlapping of said cutting edges (52, 54; 152, 154), the first blade (151) is in the form of a flat plate having the general shape of U, with the first cutting edge (152) formed at the base of the U, between the two arms (151a, 151b) of the U, the second blade (153) being resiliently biased against the arms of the U of the first blade in the inactive positions of the blades.

2. Application head according to claim 1, **characterized in that** the first and second cutting edges (52, 54; 152, 154) are rectilinear, and at least one of the two cutting edges is inclined, so that the two cutting edges form a cutting angle (φ) between them.

3. Application head according to claim 2, **characterized in that** the first cutting edge (52, 152) and the second cutting edge (54, 154) are inclined so that the bisector of the cutting angle (φ) between the first cutting edge and the second cutting edge is perpendicular to the cutting direction (T_{c}).

4. Application head according to one of claims 1 to 3, **characterized in that** it comprises a first control means able to displace the first and second blades in opposite directions along the cutting direction (T_{c}).

5. Application head according to claim 4, **characterized in that** the first control means comprises a cylinder actuating a cylinder rod cooperating with the first and second blades via a transmission cone or via a first lever and a second lever connected respectively to said blades.

6. Application head according to one of claims 1 to 3, **characterized in that** the first blade (51, 151) and the second blade (53, 153) are movable together, in translation along the guiding plane or in rotation around a direction parallel to an application roller.

7. Application head according to claim 6, in combination with claim 4 or 5, **characterized in that** it comprises a second control means able to displace the first and second blades together, in translation along the guiding plane.

8. Application head according to claim 6, **characterized in that** it comprises an integrated control means (6) able to displace the first blade (51, 151) and the second blades (53, 153) in translation along the cutting direction (T_{c}) and to displace together said blades (51, 53; 151, 153) in rotation.

9. Application head according to claim 8, **characterized in that** the integrated control means (6) comprises a control lever (61) movable around a first rotation axis (A₁) and provided with a first lever arm (63) articulated to a first blade holder (57, 157) carrying the first blade (51, 151) and a second lever arm (65, 66) articulated, by means of a link (69), to a second blade holder (59, 159) carrying the second blade (53, 153), said second lever arm (65, 66) being controlled in displacement by a cylinder rod (67), said first blade holder (57, 157) being articulated to a second rotation axis (A2) by means of a link (60) and said first and second blade holders (57, 59) being connected together by a sliding connecting means (68) for sliding along the cutting direction (T_{c}).

10. Application head according to one of claims 1 to 9, **characterized in that** the second blade (153) is resiliently biased in abutment by its cutting edge (154) against the first blade (151).

11. Method for manufacturing a composite material part comprising the application of continuous fibers onto an application surface, **characterized in that** the application of fibers is carried out by means of a fiber application head according to one of claims 1 to 10, by relative displacement of the application head with respect to the layup surface along layup trajectories.
